# EUROPEAN PATENT APPLICATION

(11) **EP 1 850 539 A1**
(43) Date of publication of application: **31.10.2007**
(21) Application number: 07005072.9
(22) Date of filing: 12.03.2007
(51) Int. Cl.: H04L 12/56

(54) **Access device and method for controlling the bandwidth**

(30) Priority: 24.04.2006 CN 200610060481
(71) Applicant: Huawei Technologies Co., Ltd., Shenzhen 518129 Guangdong (CN)
(72) Inventor: Xie, Weiping, Shenzhen 518129 Guangdong (CN); Zhao, Qiupeng, Shenzhen 518129 Guangdong (CN)
(74) Representative: Manitz, Finsterwald & Partner GbR

(57) **Abstract**

An access device for controlling a bandwidth includes a token bucket module and a processing module. The token bucket module is set for each service priority of each logical connection. The processing module is used for receiving a message from a logical connection, taking a token from corresponding token bucket module according to logical connection and priority of the message, comparing byte number of the message with byte number corresponding to the token, forwarding the message if the byte number corresponding to the token is larger than that of the message, and discarding the message otherwise. A method for controlling the bandwidth is also disclosed.

## Description

### Field of the Technology

The present invention relates to access network technologies, and particularly, to an access device and a method for controlling the bandwidth.

### Background of the Invention

Along with wide application of broadband services, development of such services as an Internet Protocol (IP) telephone and an IP video has made user services evolve from a stage of simple network accessing to a stage of concurrence of a voice service, a video service and a Web browsing service, thus resulting in increasingly high requirements of operators to Quality of Service (QoS) of user services. Correspondingly, when a service is developed, it requires that not only the bandwidth of a user be controlled, but also the bandwidth be controlled based on the service, which puts a new requirement on the QoS and bandwidth control to an access device.

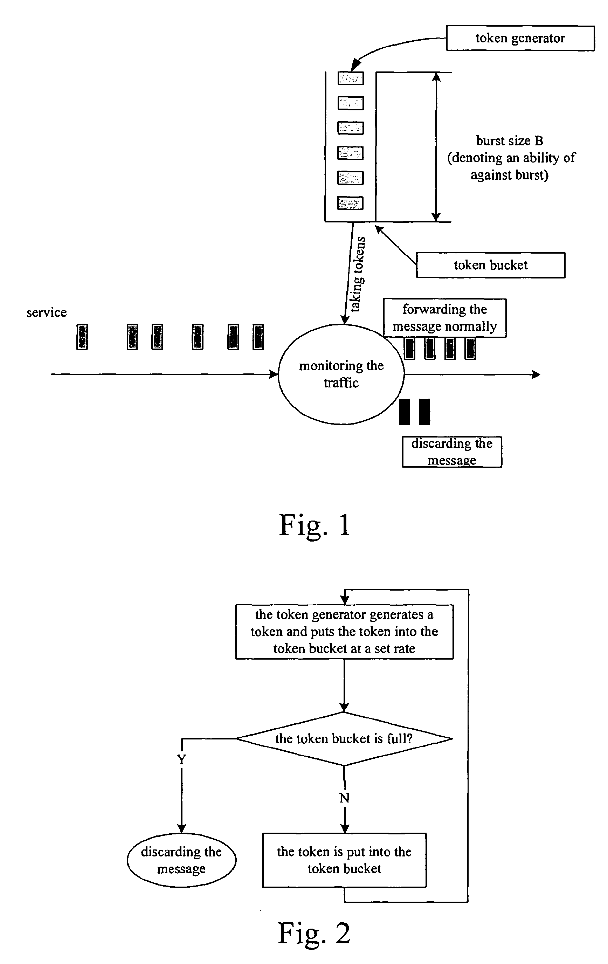

In general, a Committed Access Rate (CAR) function is used to limit a bandwidth in the prior art. The implementation principle of the CAR function is shown in Fig. 1. A token generator generates a token at a certain rate periodically and puts the generated token into a token bucket. The token generation rate denotes an average traffic which is allowed to pass by the token bucket. The token generation rate can be configured according to demands for the bandwidth. Each token represents a certain number of bytes. For example, supposing that the rate of a token generator is 1 Mbps, frequency of the token generation is one token per millisecond, and the length of a token is 1M/1000/8 = 125 (bytes). The token bucket is used for depositing the tokens. The capacity of the token bucket denotes a burst size, which is configurable. A newly generated token will be discarded if the tokens in the token bucket reach the burst size of the token bucket. A traffic monitoring module monitors traffic of all the input service messages. Specifically, when a service message reaches the traffic monitoring module, the traffic monitoring module takes tokens, the number of which is equal to the frame length of the service message, from the token bucket for the passing service message. In addition, the traffic monitoring module determines according to the frame length of each service message whether there are enough tokens in the token bucket. If there are enough tokens, the traffic monitoring module takes tokens, the number of which is equal to the frame length of the service message, and forwards the message normally; if there are not enough tokens, the traffic monitoring module takes no token and discards the service message at the same time.

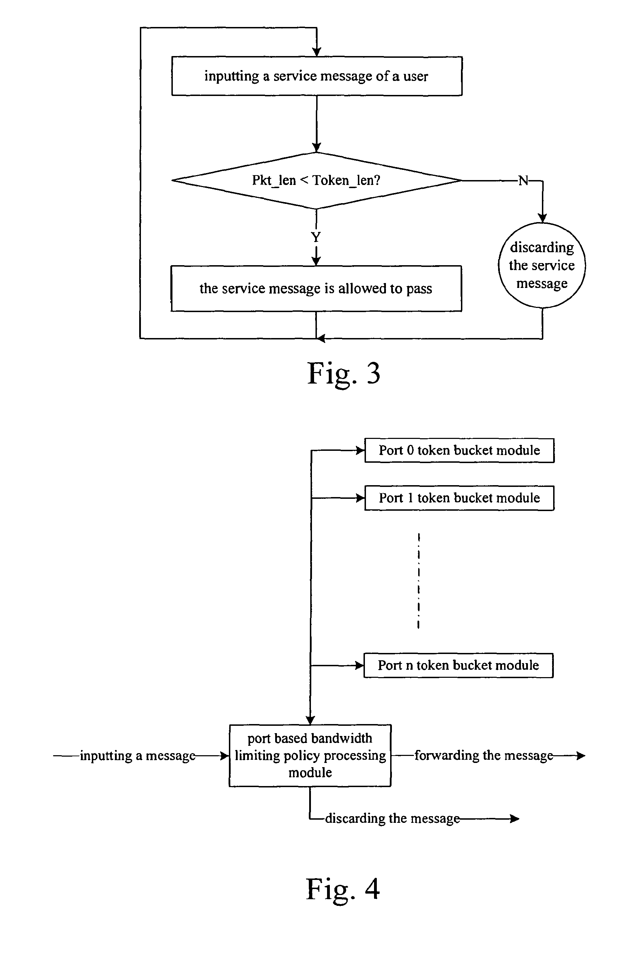

The processing procedure of the token generator is shown in Fig.2 while the processing procedure of the traffic monitoring module is shown in Fig.3, in which Pkt_len is the byte number of the length of a message needing to be processed with the traffic monitoring while Token_len is the byte number corresponding to all the tokens in the token bucket.

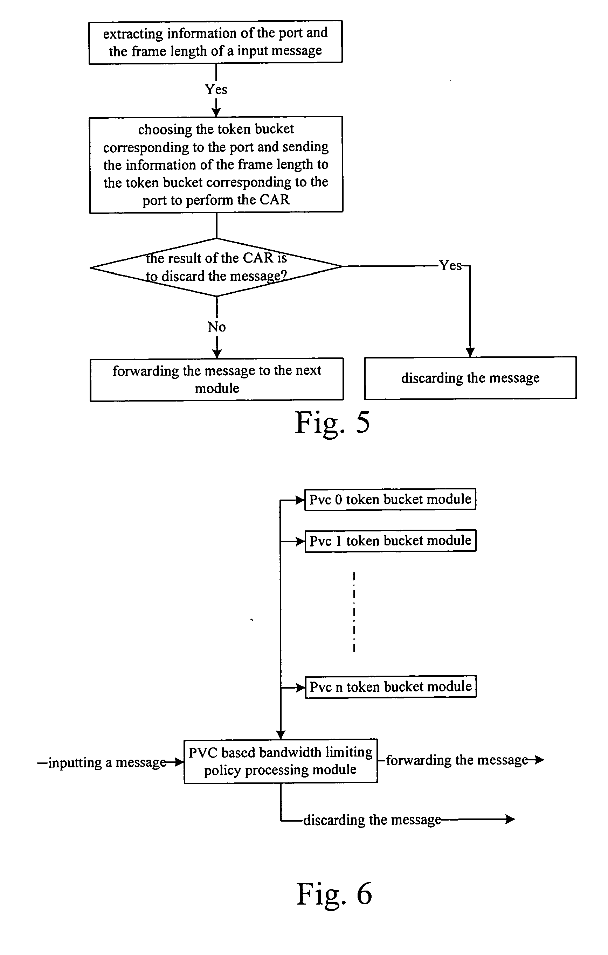

As shown in Fig.4, a first bandwidth limiting method in the prior art is to apply the CAR based on a port. Specifically, each port has a correspondingly independent token bucket and thus the bandwidth of each user can be controlled based on the port. The processing procedure of the port based bandwidth limiting policy processing module is shown in Fig.5. The disadvantage of such a bandwidth limiting method is that only the total bandwidth of a user can be controlled and the bandwidth control cannot be performed based on categorized services of the user, and thus service priorities cannot be implemented.

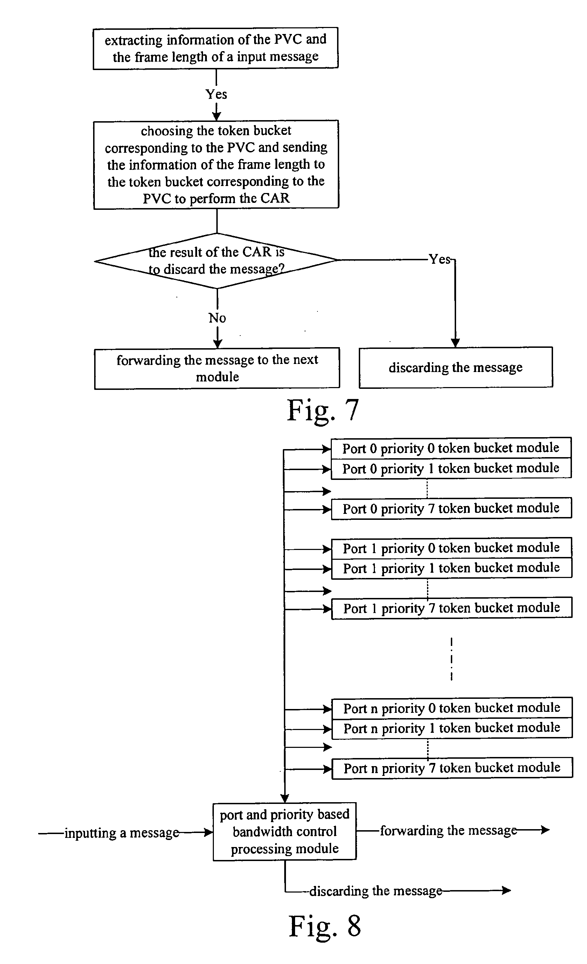

As shown in Fig.6, a second bandwidth limiting method in the prior art is to apply the CAR based on a Permanent Virtual Connection (PVC) of a user. Specifically, each PVC has a correspondingly independent token bucket and thus the bandwidth of each user can be controlled based on the PVC. The processing procedure of the PVC based bandwidth limiting policy processing module is shown in Fig.7. The disadvantage of such a bandwidth limiting method is that the service based bandwidth control can be implemented only in the case that one PVC transmits flows of one service and the bandwidth control cannot be performed according to different services if each PVC transmits flows of multiple services. For example, bandwidth of services with higher priority cannot be guaranteed in the condition that there are not multiple PVCs in an access through a Very High Speed DSL (VDSL) or an Ethernet.

### Summary of the Invention

Embodiments of the present invention provide an access device and a method for controlling the bandwidth.

An access device, includes:
at least one token bucket module, wherein the each token bucket module corresponds to a service priority of a logical connection;
a logical connection and priority based bandwidth controlling and processing module, connected with the each token bucket module, and used for receiving a message from each logical connection, taking a token from the token bucket module corresponding to the logical connection of the message as well as the service priority of the message, comparing byte number of the message with byte number corresponding to the token, if the byte number corresponding to the token is larger than that of the message, forwarding the message; otherwise discarding the message.

The token bucket module includes:
a token bucket generator, used for generating the token; and
a token bucket, used for holding the token and connecting with the token bucket generator.

The logical connection is a port.

The logical connection is a Permanent Virtual Connection (PVC).

A method for controlling bandwidth, includes:
upon receiving a message from a logical connection, extracting information of the logical connection, a service priority and byte number information of the message;
taking a token from corresponding token bucket according to the information of the logical connection and the service priority;
comparing byte number of the message with byte number corresponding to the token, if the byte number corresponding to the token is larger than the byte number of the message, forwarding the message; otherwise, discarding the message.

The process of extracting information of the logical connection, a service priority and byte number information of the message includes:
reading mode information of an access device and extracting information of priority of the message according to the mode information of the access device.

The process of taking a token from corresponding token bucket according to the information of the logical connection and the service priority includes:
determining whether a Committed Access Rate (CAR) function based on each logical connection is activated in the access device, if the CAR function based on each logical connection is activated in the access device, taking the token from the token bucket according to the information of the logical connection and the service priority, otherwise taking the token in a specified token bucket.

The logical connection is a port.

The logical connection is a Permanent Virtual Connection (PVC).

In the technical solution in accordance with embodiments of the present invention, a service bandwidth of a user is controlled based on the service priority, which can better support the development of multiple services application of a single user and thus is more beneficial for the development of multiple services application including voice, video and accessing the network by the operator.

### Brief Description of the Drawings

Fig. 1 shows a schematic diagram of the implementation principle of the CAR function in the prior art.
Fig.2 shows a flow chart of the processing of a token generator in the prior art.
Fig.3 shows a flow chart of the processing of a traffic monitoring module in the prior art.
Fig.4 shows a schematic diagram for controlling a bandwidth based on a port in combination with the CAR function in the prior art.
Fig. 5 shows a flow chart of the processing of a port based bandwidth limiting policy processing module in the prior art.
Fig.6 shows a schematic diagram for controlling a bandwidth based on a PVC in combination with the CAR function in the prior art.
Fig.7 shows a flow chart of the processing of a PVC based bandwidth limiting policy processing module in the prior art.
Fig.8 shows a schematic diagram for controlling a bandwidth based on a port and a priority using the CAR function in accordance with an embodiment of the present invention.
Fig.9 shows a flow chart of the processing of a port and priority based bandwidth controlling and processing module in accordance with an embodiment of the present invention.
Fig. 10 shows a schematic diagram for controlling a bandwidth based on a PVC and a priority using the CAR function in accordance with an embodiment of the present invention.
Fig. 11 shows a flow chart of the processing of a PVC and priority based bandwidth controlling and processing module in accordance with an embodiment of the present invention.

### Embodiments of the Invention

The present invention is hereinafter further described in detail with reference to the accompanying drawings and embodiments.

To implement control of a service bandwidth based on a service priority, a processing module needs to extract priority information of a message first after receiving the message. The priority information can be extracted from an 802.1P area of a Virtual Local Area Network TAG (VLAN TAG) or from a Type of Service (TOS) area in an IP message, and the specific principle for extracting is that the priority information is extracted from the TOS area if the access device operates in a mode of third layer while the priority information is extracted from the 802.1P area if the access device operates in a mode of second layer. The CAR function which is performed based on a port (PVC) and priority in an access device can be activated or inactivated based on user's configuration. Thus, the bandwidth can be controlled based on the service priority no matter the user uses a single PVC or multiple PVCs.

For example, supposing that a user has applied for a bandwidth of 10 M and there are two access devices of user terminal. One is a Set Top Box (STB) and the other is a Personal Computer (PC). The STB establishes a PVC to an access device, thus can access the network as well as acquire the video service; while the PC establishes a PVC to the access device, thus can access the network, perform a voice communication and acquire the video service. The access device performs the CAR based on the service priority. Specifically, the voice communication is regarded as one kind of service and allocated with a bandwidth of, for example, 1 M; video service of the STB and that of the PC are regarded as another kind of service and allocated with a bandwidth of, for example, 6M; network accessing service of the STB and that of the PC are allocated with the remained bandwidth of 3M. With such an allocation of the bandwidth, various services would not take over the bandwidth with each other.

As shown in Fig.8, the access device includes a token bucket module including a token bucket generator and a token bucket, a port and priority based bandwidth controlling and processing module. A token bucket module is set for each service priority of each port. The port and priority based bandwidth controlling and processing module is connected with each token bucket module and used for receiving messages from each port, taking tokens from corresponding token bucket module according to information of port, priority and frame length of a message, forwarding the message if there are enough tokens, and discarding the message if there are not enough tokens. The 802.1P area and the TOS area are both 3 bits. The 802.1 P area and the TOS area can categorize services into services of 8 priorities, that is, services of priority 0 to services of priority 7. Each of the port and priority corresponds to an independent token bucket and thus a bandwidth is controlled based on the port and priority.

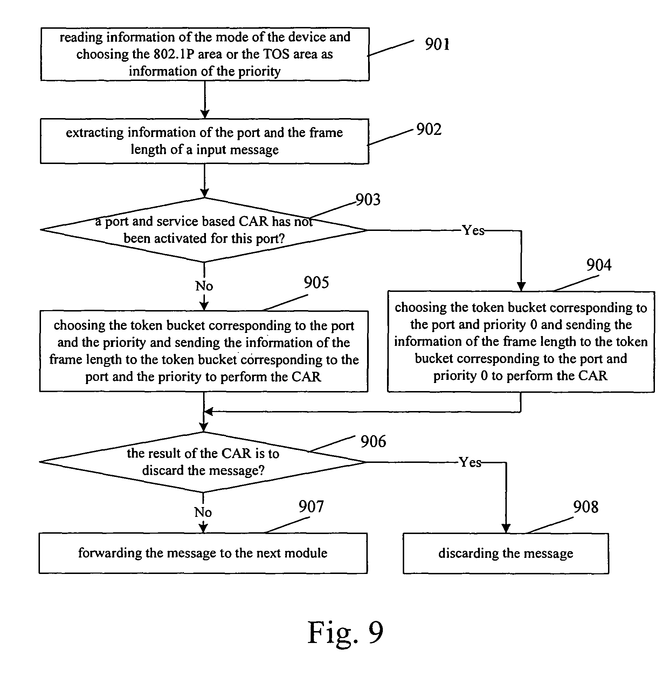

As shown in Fig.9, the processing procedure of the port and priority based bandwidth controlling and processing module is described as follows.

Step 901: reading mode information of an access device and extracting priority information of a message according to the mode information of the access device;

Step 902: reading information of the port and the frame length of the message;

Step 903: determining whether CAR functions based on each port are activated in the access device, performing step 904 if the CAR functions based on each port are activated in the access device, otherwise performing step 905;

Step 904: taking tokens from corresponding token bucket according to the information of the port and the priority;

Step 905: taking a token from a specified token bucket;

Step 906: comparing the byte number of the message with that corresponding to the token, if the byte number corresponding to the token is larger than that of the message, performing step 907, otherwise performing step 908;

Step 907: forwarding the message;

Step 908: discarding the message.

Choosing the priority information is mainly to choose the 802.1P area or the TOS area. The general choosing principle adopted is that the 802.1P area is chosen if the access device operates in a mode of the second layer while the TOS area is chosen if the access device operates in a mode of the third layer. Those discarded messages are passed to a statistical module to be processed. It is determined based on the port whether the port and priority based CAR has been activated, and a port based CAR processing is performed with a fixed choice of the port and priority 0 if the port and priority based CAR has not been activated. The method for choosing the fixed priority is not limited, that is to say, any one of priority 0 to priority 7 can be chosen and then what need to do is to configure corresponding parameters and to set the fixed token bucket module corresponding to a priority.

Though there is another PVC and priority based bandwidth limiting policy in an access though an Asymmetric Digital Subscriber Line (ADSL) or an Asynchronous Transfer Mode (ATM), this policy cannot be applied and only the port and priority based bandwidth control policy can be applied in an IP based access, such as an access though a VDSL2 or an Ethernet, because there is no PVC.

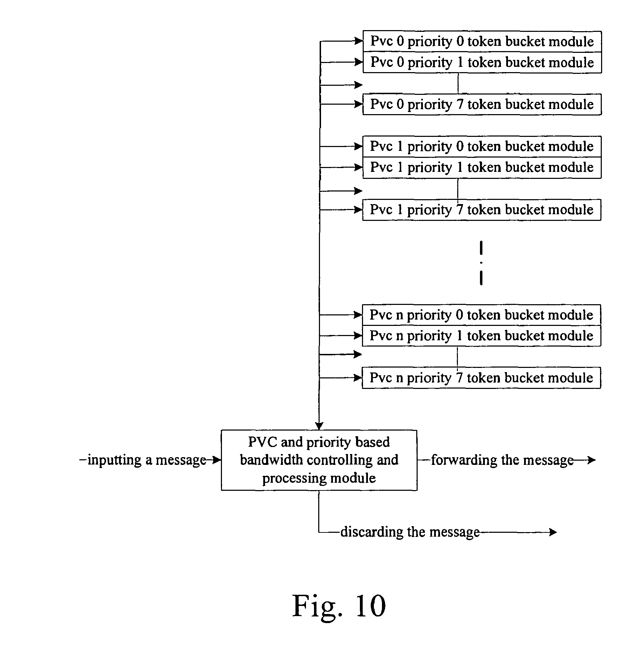

As shown in Fig. 10, the access device includes a PVC and priority based bandwidth controlling and processing module and a token bucket module including a token bucket generator and a token bucket. A token bucket module is set for each service priority of each PVC. The PVC and priority based bandwidth controlling and processing module is connected with each token bucket module and used for receiving messages from each PVC, taking tokens from corresponding token bucket module according to information of PVC, priority and frame length of a message, forwarding the message if there are enough tokens, and discarding the message if there are not enough tokens.

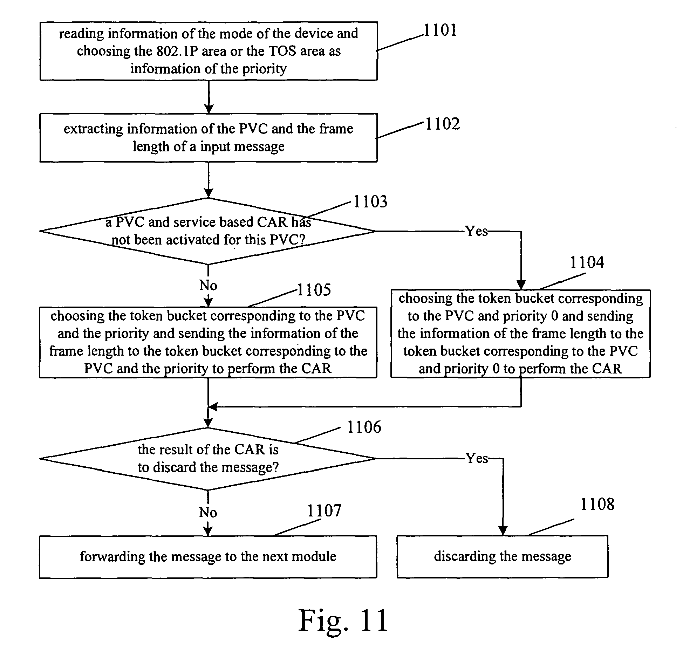

As shown in Fig. 11, the processing procedure of the PVC and priority based bandwidth controlling and processing module is described as follows.

Step 1101: reading mode information of an access device and extracting priority information of a message according to the mode information of the access device;

Step 1102: reading information of the PVC and the frame length of the message;

Step 1103: determining whether CAR functions based on each PVC are activated in the access device, if the CAR functions based on each PVC are activated in the access device, performing step 1104, otherwise performing step 1105;

Step 1104: taking a token from corresponding token bucket according to the information of the PVC and the priority;

Step 1105: taking a token from a specified token bucket;

Step 1106: comparing the byte number of the message with that corresponding to the token, if the byte number corresponding to the token is larger than that of the message, performing step 1107, otherwise performing step 1108;

Step 1107: forwarding the message;

Step 1108: discarding the message.

According to situations of the 802.1P area and the TOS area, priorities are divided into priorities of 8 levels, that is, priority 0 to priority 7, in general. The number of the PVCs is determined based on the number of the PVCs supported by the device and is larger than the number of the ports. Each of the PVC and priority corresponds to an independent token bucket and thus the PVC and priority based bandwidth control can be implemented. Choosing the priority information is mainly to choose the 802.1P area or the TOS area. The general choosing principle is that the 802.1P area is chosen if the access device operates in a mode of the second layer while the TOS area is chosen as the priority area if the access device operates in a mode of the third layer. Those discarded messages are passed to a statistical module to be processed. It is determined according to configurations of the PVC whether the PVC and priority based CAR should be activated, and a PVC based CAR processing is performed with a fixed choice of the PVC and priority 0 if the port and priority based CAR has not been activated. The method for choosing a fixed priority is not limited, that is to say, any one of priority 0 to priority 7 can be chosen and then what need to do is to configure corresponding parameters and to set the fixed token bucket module corresponding to a priority.

Though the present invention has been illustrated and described by referring to preferred embodiments of the present invention, a skilled person in the art should understand that various changes can be made in its form and detail without departing from the spirit or scope of the present invention defined in the appended claims.

## Claims

1. An access device, comprising:
at least one token bucket module, wherein the each token bucket module corresponds to a service priority of a logical connection;
a logical connection and priority based bandwidth controlling and processing module, connected with the each token bucket module, and used for receiving a message from each logical connection, taking a token from the token bucket module corresponding to the logical connection of the message as well as the service priority of the message, comparing byte number of the message with byte number corresponding to the token, if the byte number corresponding to the token is larger than that of the message, forwarding the message; otherwise discarding the message.

2. The access device of Claim 1, wherein the token bucket module comprises:
a token bucket generator, used for generating the token; and
a token bucket, used for holding the token and connecting with the token bucket generator.

3. The access device of Claim 1, wherein the logical connection is a port.

4. The access device of Claim 1, wherein the logical connection is a Permanent Virtual Connection (PVC).

5. A method for controlling bandwidth comprising:
upon receiving a message from a logical connection, extracting information of the logical connection, a service priority and byte number information of the message;
taking a token from corresponding token bucket according to the information of the logical connection and the service priority;
comparing byte number of the message with byte number corresponding to the token, if the byte number corresponding to the token is larger than the byte number of the message, forwarding the message; otherwise, discarding the message.

6. The method of Claim 5, wherein the process of extracting information of the logical connection, a service priority and byte number information of the message comprises:
reading mode information of an access device and extracting information of priority of the message according to the mode information of the access device.

7. The method of Claim 6, wherein the process of taking a token from corresponding token bucket according to the information of the logical connection and the service priority comprises:
determining whether a Committed Access Rate (CAR) function based on each logical connection is activated in the access device, if the CAR function based on each logical connection is activated in the access device, taking the token from the token bucket according to the information of the logical connection and the service priority, otherwise taking the token in a specified token bucket.

8. The method of Claim 5, wherein the logical connection is a port.

9. The method of Claim 5, wherein the logical connection is a Permanent Virtual Connection (PVC).
